# EUROPEAN PATENT APPLICATION

(11) **EP 3 138 767 A1**
(43) Date of publication of application: **08.03.2017**
(21) Application number: 15786437.2
(22) Date of filing: 28.04.2015
(51) Int. Cl.: B63H 21/38, F02M 21/02, F02M 37/00, B63H 21/12

(54) **FUEL GAS SUPPLY SYSTEM OF VESSEL**

(30) Priority: 30.04.2014 KR 20140003460 U
(71) Applicant: Daewoo Shipbuilding & Marine Engineering Co., Ltd., Seoul 100-180 (KR)
(72) Inventor: LEE, Joon Chae, Daegu 701-765 (KR); KANG, Dong Eok, Geoje-si, Gyeongsangnam-do 656-907 (KR); PARK, Cheong Gi, Seoul 130-861 (KR)
(74) Representative: Intès, Didier Gérard André
(86) International application number: PCT/KR2015/004239
(87) International publication number: WO 2015/167214

(57) **Abstract**

Disclosed herein is a fuel gas supply system (FGSS) of a ship supplying natural gas to an engine as fuel. The fuel gas supply system of a ship may include: a cargo tank storing a liquid cargo; a vent mast connected to the cargo tank; a fuel supply line connected to the engine to supply fuel; and a vent line connected to the fuel supply line, in which the vent line may be connected to the vent mast.

## Description

### [Technical Field]

The present invention relates to a fuel gas supply system of a ship, and more particularly, to a fuel gas supply system of a ship having a vent line through which natural gas in a fuel supply line of a ship is discharged.

### [Background Art]

Liquefied gases such as liquefied natural gas (LNG) and liquefied petroleum gas (LPG) are obtained by cooling natural gas or petroleum gas to cryogenic temperature (in case of the liquefied natural gas, approximately - 163°C). Accordingly, the liquefied gases have a greatly reduced volume compared to a gaseous state, and therefore are very suitable for long distance transport by sea.

A liquefied gas carrier such as an LNG carrier is to transport liquefied gas by sea to a terrestrial destination and unload the liquefied gas. For this purpose, the liquefied gas carrier includes a cargo tank (often referred to as 'cargo hold') that may bear the cryogenic temperature of the liquefied gas. Besides the liquefied gas carrier, even a general ship may include a cargo tank that stores liquid cargos such as liquefied gas supplied to an engine as fuel.

Hereinafter, the cargo tank is a concept including a liquefied gas cargo tank of a liquefied gas carrier and a cargo tank for liquid cargos of a general ship.

Even though the cargo tank is heat-shielded, since heat is continuously transferred to liquid cargos such as liquefied gas from the outside and liquid cargo is evaporated even when a temperature is even slightly higher than the liquefaction temperature that is cryogenic at normal pressure (in case of the liquefied natural gas, approximately - 163 °C), the liquid cargo is continuously vaporized in the cargo tank while a ship transports the liquid cargo and therefore boil-off gas (BOG) is generated in the cargo tank.

The generated boil-off gas may increase a pressure in the cargo tank and accelerate a flow of the liquid cargo depending on pitching and rolling of a ship to cause a structural problem. For this reason, a vent mast that discharges the boil-off gas into the atmosphere in an emergency is installed on the top of the cargo tank to reduce generation of the boil-off gas and treat the boil-off gas already generated.

In the case of the liquefied gas cargo tank, a fuel supply line may be installed between an engine and a cargo tank so that boil-off gas may be supplied to the engine and used as fuel, in which the fuel supply line may supply liquefied gas, submitted to compressing and heating processes to be used in the engine as fuel, as well as boil-off gas to the engine.

Hereinafter, natural gas is a concept including boil-off gas and liquefied gas that is treated to be used in an engine as fuel.

A vent mast for the fuel supply line is installed separately from the vent mast for the cargo tank, to discharge the natural gas in the fuel supply line, when the emergency situation arises that the engine suddenly shuts down or the pressure in the fuel supply line abnormally increases (overpressure).

Meanwhile, a MEGI engine may be installed in a ship. Here, the MEGI engine which is a high-pressure gas injection engine may use liquefied gases, such as liquefied natural gas and liquefied petroleum gas that are cheaper and cleaner energy sources than heavy oil, as fuel and therefore has been becoming more interesting.

However, the MEGI engine requires a gas supply pressure of approximately 150 to 400 bara (absolute pressure) for driving. Therefore, to supply the boil-off gas in the cargo tank to the MEGI engine and use the boil-off gas in the MEGI engine as fuel, excessive power is consumed to compress the boil-off gas at a high pressure.

Therefore, a fuel gas supply system (FGSS) has been used that re-liquefies some of the boil-off gas generated within the cargo tank using aboil-off gas re-liquefying apparatus and returns the re-liquefied boil-off gas back to the liquefied gas cargo tank and compresses and heats the remaining, non re-liquefied boil-off gas and the liquefied gas stored in the cargo tank and then supplies the compressed and heated natural gas as driving fuel of the MEGI engine.

### [Disclosure]

### [Technical Problem]

The related art has a problem in that the vent mast for the cargo tank for liquid cargos and the vent mast for the fuel supply line are separately installed and therefore, enormous costs and efforts are required.

An object of the present invention is to provide a fuel gas supply system for a ship in which an installation of a vent mast for a fuel supply line is omitted and a vent line connected to the fuel supply line is directly connected to a vent mast for a cargo tank.

### [Technical Solution]

According to an exemplary embodiment of the present invention, there is provided a fuel gas supply system (FGSS) of a ship supplying natural gas to an engine as fuel, including: a cargo tank storing a liquid cargo; a vent mast connected to the cargo tank; a fuel supply line connected to the engine to supply fuel; and a vent line branched from the fuel supply line, in which the vent line may be connected to the vent mast.

The fuel gas supply system of a ship may include: a plurality of cargo tanks; and a plurality of vent masts individually connected to the plurality of cargo tanks, and the vent line may be connected to any one of the plurality of vent masts.

The vent line may be connected to at least two of the plurality of vent masts.

The vent line may be connected to at least one of the plurality of vent masts in proximity to a branch point where the vent line is branched from the fuel supply line.

The fuel gas supply system of a ship may include: a plurality of cargo tanks; a plurality of discharge lines individually connected to the plurality of cargo tanks; and a vent manifold having the plurality of discharge lines joined thereto, and the vent manifold may be connected to the vent mast.

The fuel gas supply system may include a plurality of vent masts individually connected to the plurality of cargo tanks and the vent manifold may be connected to at least one of the plurality of vent masts.

The ship may be a liquefied natural gas carrier and the cargo tank may store the liquefied natural gas.

The ship may be any one of a liquefied petroleum gas carrier, an ethane carrier, and a very large crude carrier.

The engine may be a MEGI engine.

According to another exemplary embodiment of the present invention, there is provided a fuel gas discharge apparatus of a fuel gas supply system of a ship supplying natural gas to an engine as fuel, in which the fuel gas in the fuel gas supply system may be discharged into the atmosphere through a vent mast installed to discharge boil-off gas in a cargo tank into the atmosphere.

### [Advantageous Effects]

According to the fuel gas supply system of a ship in accordance with the exemplary embodiments of the present invention, the installation of the vent mast for the fuel supply line is omitted, and therefore the costs and efforts required to install the vent mast for the fuel supply line may be saved and the existing vent line branched from the fuel supply line is directly connected to the existing vent mast for the cargo tank, and therefore the efficient installation may be made without the separate parts or connection processes. Further, the vent mast for the fuel supply line need not be managed separately and only the vent mast for the cargo tank needs to be managed, and therefore the management after installation may be convenient.

### [Description of Drawings]

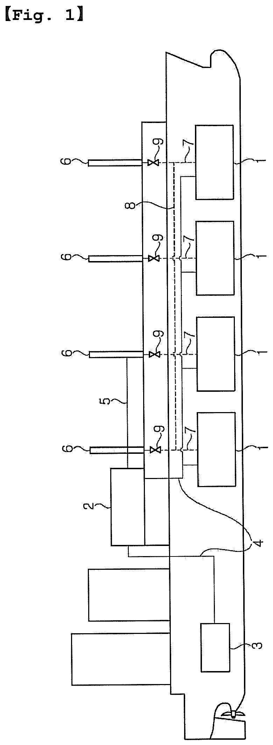

FIG. 1 is a schematic view of a fuel gas supply system of a ship according to an exemplary embodiment of the present invention.

### [Best Mode]

Hereinafter, configurations and effects of exemplary embodiments of the present invention will be described with reference to the accompanying drawings. In addition, the following exemplary embodiments may be changed in various forms, and therefore the technical scope of the present invention is not limited to the following exemplary embodiments.

FIG. 1 is a schematic view of a fuel gas supply system of a ship according to an exemplary embodiment of the present invention. As illustrated in FIG. 1, the fuel gas supply system of a ship according to the exemplary embodiment of the present invention supplies natural gas from a cargo tank 1 of a ship to an engine 3 through a fuel supply line 4.

The ship according to the exemplary embodiment of the present invention may be any one of a liquefied natural gas carrier, a liquefied petroleum gas carrier, an ethane carrier, and a very large crude carrier (VLCC).

The cargo tank 1 is installed in a ship to store liquid cargos such as liquefied gas supplied to the engine 3 as fuel and includes a liquefied natural gas cargo tank that is installed in the liquefied gas carrier to transport liquefied gas. The liquid cargos such as liquefied gas are stored in a cryogenic temperature state and may be detonated when exposed to impact, and therefore the cargo tank 1 storing the liquid cargos has a structure in which impact resistance and liquid tightness are safely kept.

In particular, unlike an immobile ground tank, a structure of the liquefied gas cargo tank 1 installed in a mobile ship needs to have a measure against mechanical stress due to flow. Further, the cargo tank 1 may be designed to have enough strength to bear an increment in pressure due to boil-off gas to permit an increase in pressure due to the boil-off gas generated in the cargo tank 1 while a ship sails.

The cargo tank 1 may be classified into an independent cargo tank and a membrane type cargo tank depending on whether a load of cargos is directly applied to an insulator. Among those, the membrane type cargo tank is classified into a GTT NO 96-2 type and a Mark III type and the independent cargo tank is classified into a MOSS type and an IHI-SPB type.

The GTT NO 96-2 type and the GTT Mark III type have been called a GT type and a TGZ type. Gaz Transport (GT) Co. and Technigaz (TGZ) Co. are renamed to Gaztransport & Technigaz (GTT) Co. in 1995 and thus the GT type has been used, being renamed to GTT NO 96-2 type and the TGZ type has been used, being renamed to the GTT Mark III type.

Some of the boil-off gas generated in the cargo tank 1 is not re-liquefied or remains without being supplied to the engine 3 as fuel and if the remaining boil-off gas is continuously accumulated, the pressure in the cargo tank 1 may increase, increasing the explosion hazard of the cargo tank 1 and may accelerate the flow of liquid cargos to cause a structural problem. Therefore, a vent mast 6 for discharging boil-off gas remaining in the cargo tank in an emergency is installed on a top of the cargo tank 1.

The fuel supply line 4 is connected from the cargo tank 1 to the engine 3 to supply the natural gas in the cargo tank 1 to the engine 3 and thus the natural gas may be used in the engine 3 as fuel. When the emergency situation arises that the engine 3 suddenly shuts down or the pressure in the fuel supply line 4 is abnormally increased (over pressure), there is a need to discharge the natural gas in the fuel supply line 4.

Therefore, a vent line 5 branched from the fuel supply line 4 is installed and the vent line 5 is connected to the vent mast 6 installed on top of the cargo tank 1, thereby discharging the natural gas in the fuel supply line 4 through the vent mast 6 via the vent line 5 when the foregoing emergency situation arises. A fuel supply module 2 such as a fuel gas supply system (FGSS) is installed on the fuel supply line 4 to perform operations of connecting between the vent line 5 and the fuel supply line 4, liquefying and heating liquefied gas to be used in the engine 3 as fuel, or the like.

The cargo tank 1 may also store liquid cargos other than the liquefied gas and the fuel supply line 4 is installed to supply fuel to the engine 3, and therefore the cargo tank 1 storing the liquid cargos other than the liquefied gas may not be provided with the fuel supply line 4. However, even in the case of the cargo tank 1 storing the liquid cargos other than the liquefied gas, the boil-off gas may be generated, and therefore the cargo tank 1 may be provided with the vent mast 6 to discharge the generated boil-off gas. Therefore, the vent line 5 branched from the fuel supply line 4 connected to the cargo tank storing the liquefied gas may also be connected to the vent mast 6 that is installed on the top of the cargo tank 1 storing the liquid cargos other than the liquefied gas.

The engine 3 is driven by using the natural gas supplied from the cargo tank 1 through the fuel supply line 4 as fuel and a ship obtains propulsion by rotating a propeller using a driving force of the engine 3.

The engine 3 applied to the exemplary embodiment of the present invention may be a MEGI engine. For example, in the case of a MEGI engine manufactured and sold by MAN B & W Diesel Co., a pressure of fuel gas required for the MEGI engine may be approximately 150 to 400 bara (absolute pressure), preferably, approximately 250 bara (absolute pressure). The natural gas that is compressed to about 250 bara (absolute pressure) and then heated to be in a supercritical state (state in which liquid and gas are not differentiated) is supplied to the MEGI engine as fuel.

The MEGI engine may also use dual fuel. To supply the dual fuel to the MEGI, a ship may further include an oil cargo tank storing oil such as heavy oil and diesel oil as fuel separately from the liquefied gas cargo tank 1. Therefore, either the liquefied natural gas or the oil is appropriately selected, depending on the sailing state of the ship, to drive the MEGI engine.

In addition, the fuel gas supply system of a ship according to the exemplary embodiment of the present invention may be variously applied to an engine using fuel gas.

The plurality of cargo tanks 1 may be installed in one ship and the vent masts 6 may be individually installed in the plurality of cargo tanks 1. The vent lines 5 connected to the fuel supply lines 4 may also be connected to all of the plurality of vent masts 6 or may be connected only to some thereof.

Further, discharge lines 7 may be individually connected to the plurality of cargo tanks 1, and the plurality of discharge lines 7 are united into one in a vent manifold 8 to be connected to the vent mast 6 installed on the top of the cargo tank 1. The boil-off gas in the cargo tank 1 may be discharged from the vent mast 6 through the vent manifold 8 via the discharge line 7.

The plurality of vent masts 6 may all also be connected to the vent manifold 8 but only some of the vent masts 6 may be selected to be connected to the vent manifold 8 by a method of locking some of valves 9 individually installed between the plurality of vent masts 6 and the vent manifold 8. Further, the fuel supply lines 4 individually connected to the plurality of cargo tanks 1 may be united into one to be connected to the engine 3 via the fuel supply module 2.

Although the present invention has been described based on the specific exemplary embodiments, various changes, alterations, or modifications may be made by those skilled in the art within the spirit and the scope of the present invention and the following claims. Therefore, the above-mentioned description and the accompanying drawings are to be construed to exemplify the present invention rather than limiting the technical idea of the present invention.

## Claims

1. A fuel gas supply system (FGSS) of a ship supplying natural gas to an engine as fuel, comprising:
a cargo tank storing a liquid cargo;
a vent mast connected to the cargo tank;
a fuel supply line connected to the engine to supply fuel; and
a vent line branched from the fuel supply line,
wherein the vent line is connected to the vent mast.

2. The fuel gas supply system of a ship of claim 1, further comprising:
a plurality of cargo tanks; and
a plurality of vent masts individually connected to the plurality of cargo tanks,
wherein the vent line is connected to any one of the plurality of vent masts.

3. The fuel gas supply system of a ship of claim 2, wherein the vent line is connected to at least two of the plurality of vent masts.

4. The fuel gas supply system of a ship of claim 2, wherein the vent line is connected to at least one of the plurality of vent masts in proximity to a branch point where the vent line is branched from the fuel supply line.

5. The fuel gas supply system of a ship of claim 1, further comprising:
a plurality of cargo tanks;
a plurality of discharge lines individually connected to the plurality of cargo tanks; and
a vent manifold having the plurality of discharge lines joined thereto,
wherein the vent manifold is connected to the vent mast.

6. The fuel gas supply system of a ship of claim 5, further comprising a plurality of vent masts individually connected to the plurality of cargo tanks, wherein the vent manifold is connected to at least one of the plurality of vent masts.

7. The fuel gas supply system of a ship of claim 1, wherein the ship is a liquefied natural gas carrier, and
the cargo tank stores the liquefied natural gas.

8. The fuel gas supply system of a ship of claim 1, wherein the ship is any one of a liquefied petroleum gas carrier, an ethane carrier, and a very large crude carrier.

9. The fuel gas supply system of a ship of claim 1, wherein the engine is a MEGI engine.

10. A fuel gas discharge apparatus of a fuel gas supply system of a ship supplying natural gas to an engine as fuel, wherein fuel gas in the fuel gas supply system is discharged into the atmosphere through a vent mast installed to discharge boil-off gas in a cargo tank into the atmosphere.
